## Europäisches Patentamt
## European Patent Office
## Office européen des brevets

(11) Publication number: **0 193 319**
**A2**

# EUROPEAN PATENT APPLICATION

(21) Application number: **86301053.4**

(22) Date of filing: **17.02.86**

(51) Int. Cl.⁴: **B 60 T 13/24**

(30) Priority: **01.03.85 US 707393**

(43) Date of publication of application:
**03.09.86 Bulletin 86/36**

(84) Designated Contracting States:
**DE FR**

(71) Applicant: **GENERAL MOTORS CORPORATION**
**General Motors Building 3044 West Grand Boulevard**
**Detroit Michigan 48202(US)**

(72) Inventor: **Brademeyer, David L.**
**1568 Langdon Drive**
**Centerville Ohio 45459(US)**

(74) Representative: **Breakwell, John Neil Bower et al,**
**GM Patent Section Luton Office (F6) P.O. Box No. 3**
**Kimpton Road**
**Luton Beds. LU2 OSY(GB)**

(54) Brake booster and master cylinder assembly.

(57) A vacuum-suspended brake booster and master cylinder assembly is disclosed having a shorter overall length than heretofore, with the master cylinder primary piston (60) also acting as the booster reaction retainer and the push rod from the booster piston (24) to the master cylinder (12). This arrangement allows the rear portion of the master cylinder assembly to be positioned well back into the booster housing (14) for a reduced overall length of the brake booster and master cylinder assembly.

./...

BRAKE BOOSTER AND MASTER CYLINDER ASSEMBLY

This invention relates to a brake booster and master cylinder assembly as specified in the preamble of claim 1, for example as disclosed in US-A-3 910 048.

The invention is concerned with the provision of such an assembly allowing the master cylinder to be axially shortened by making the primary piston serve additional purposes.

To this end, a brake booster and master cylinder assembly in accordance with the present invention is characterised by the features specified in the characterising portion of claim 1.

In such an assembly the primary piston, in addition to its normal function of pressurizing brake fluid in the primary pressurizing chamber, can effectively replace the booster reaction retainer and push rod which normally extends from the booster power piston to the primary piston of the master cylinder.

With an assembly in accordance with the present invention, therefore, the rear end of the master cylinder can be telescoped into the booster for a reduced overall length of the assembly.

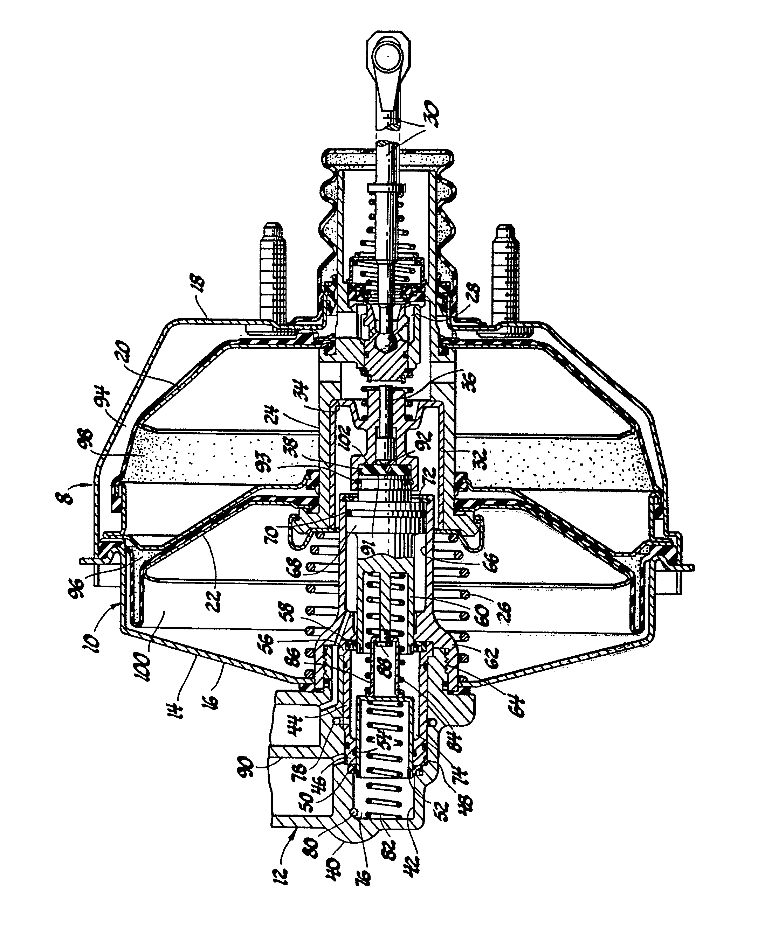

In the drawing, the single Figure is a longitudinal sectional view, with parts broken away and in elevation, of a preferred embodiment of a brake booster and master cylinder assembly in accordance with the present invention.

With reference now to the drawing, a brake booster and master cylinder assembly 8 of the vacuum-suspended type is shown which includes a brake booster assembly 10 and a master cylinder assembly 12. The booster assembly 10 has a housing 14 defined by a housing front section 16 and a housing rear section 18. The booster assembly 10 is illustrated as being of the tandem-diaphragm vacuum-suspended type, having two power walls 20 and 22 mounted on the booster piston 24. The power walls and the booster piston are movable in the housing in the brake-actuating direction under differential pressures acting across the power walls. A booster return spring 26 continuously urges the power walls and the booster piston towards the brake-release position. The booster assembly is controlled by a valve arrangement 28 mounted in the rear end of the booster piston 24. The booster push rod 30 is activated by the vehicle operator by way of a brake pedal, not shown, to control the movements of valves in the valve arrangement 28 and therefore control the operation of the brake booster assembly, as is well known in the art.

The booster piston 24 has a booster reaction housing 32 secured in a recess formed in the forward end of the piston 24 and abutting a shoulder 34 formed in the piston recess. The reaction housing 32 has a reaction plunger 36 which is reciprocably mounted therein and co-operates with the reaction disc 38 to transfer a percentage of the reaction force through the plunger 36 and the valve controls 28 to the push rod 30 and thus to the vehicle brake pedal so that reaction may be felt by the vehicle operator. To the extent described so far, the reaction disc and reaction plunger and their operation are well known in the art.

The master cylinder assembly 12 has a housing 40 provided with a stepped cylinder bore 42. A generally cylindrical sleeve 44 is positioned in the stepped cylinder bore 42 so that its forward end 46 engages a shoulder 48 of the bore 42. A secondary piston V-block seal 50 is mounted adjacent the bore shoulder 48 and at the forward end of the sleeve 44 so that its inner periphery co-operates with the outer cylindrical surface of a secondary pressurizing piston 52 reciprocably mounted within the bore 42. The forward end 46 of the sleeve 44 is provided with an inner-periphery cylindrical surface having a seal 54 which sealingly engages the outer cylindrical surface of the secondary piston 52 to prevent fluid leakage. The rear end 56 of the sleeve 44 provides a mounting for a primary piston V-block seal 58, the inner periphery of which is normally in sealing engagement with the outer cylindrical surface of the forward section of the primary pressurizing piston 60.

The master cylinder housing 40 has a housing rear extension 62 suitably secured to the main housing by means such as a threaded connection 64. The bore 42 extends through the housing rear extension 62 and has an enlarged after-section 66 forming a cylinder in which the after-section of the primary pressurizing piston 60 is reciprocably received. This piston after-section is formed by a land 68 having a seal 70 positioned in a groove in the land and sealingly engaged with the bore section 66. A suitable piston stop and retainer, such as a snap ring 72, is positioned in the rear opening of the bore section 66 and is engaged by the rear side of the land 68 to define the fully released position of the primary pressurizing piston 60.

A primary pressurizing chamber 74 is provided by the primary piston 60, the secondary piston 52 and the inner cylindrical portion of the the sleeve 44. A secondary pressurizing chamber 76 is defined by the secondary piston 52 and the forward end of the stepped cylinder bore 42. Pressure outlets 78 and 80 are respectively provided for the primary and secondary pressurizing chambers 74 and 76, and are adapted to be connected to separate brake-actuating circuits, as is well known in the art. A secondary piston return spring 82 is positioned in the chamber 76 and urges the secondary piston 52 towards the release position. A primary piston return spring 84 is suitably caged by a spring retainer 86 and a headed member 88, formed on or secured to the primary pressurizing piston 60, in a manner well known in the art. The primary piston return spring 84 continually urges the primary piston towards the piston stop 72, and is somewhat heavier than the secondary piston return spring 82 so that it also provides a stop for the secondary piston 52 to locate that piston in the release position, as shown in the drawing.

A reservoir portion 90 of the master cylinder housing 40 is provided with suitable compensation ports arranged to provide reservoir brake fluid immediately behind the V-block seals 50 and 58. Thus brake fluid from the reservoir portion may flow past the inner peripheral lips of the V-block seals 50 and 58 as needed to retain hydraulic brake fluid in the brake circuits upon brake release. In the full brake-release position, suitable relieved sections formed on the forward ends of the primary piston 60 and the secondary piston 52 permit fluid to be transferred from the pressurizing chambers around the V-block seals and back into the reservoir as needed for brake cooling, for example.

The effective areas of the primary and secondary pistons may be such that the same amount of fluid is displaced by each piston, or they may be so arranged as to provide a quick take-up arrangement, with the primary piston at least initially displacing a larger volume of fluid as brake actuation is begun.

The rear end 92 of the primary pressurizing piston 60 extends into the reaction housing 32 and abuts the forward side surface of a pressure wall 91 of the reaction disc 38. A snap ring 93 fitting in mating grooves on the piston rear end 92 and in the reaction housing 32 may be used to releasably hold the piston rear end 92 within the housing 32. Some relative axial movement is permitted by making one of the grooves somewhat wider than the width of the snap ring 93. Thus the primary piston 60 is formed to act as a booster reaction retainer as well as a push rod between the booster assembly and the primary pressurizing piston of the master cylinder. Also, upon release, the booster return spring 26 may exert a retraction force on the primary piston 60 by way of the snap ring 93.

When the assembly 8 is operated, the vehicle operator exerts an axial force on the push rod 30, causing the valve arrangement 28 to operate in a well-known manner to close off connection between the booster variable-pressure chambers 94 and 96, located on the rear sides of the power walls 20 and 22 respectively, and the vacuum-suspended chambers 98 and 100 located on the forward sides of power walls 20 and 22 respectively. The booster is maintained in vacuum suspension by vacuum from a suitable source, not shown, by way of a suitable check valve, not shown, as is well known in the art. Further movement of the push rod 30 in the brake-actuating direction will cause the valve arrangement 28 to controllably admit air under atmospheric pressure into the booster variable-pressure chambers 94 and 96, thereby generating differential pressures across the power wall 20 and 22 and moving the booster power walls and booster piston 24 leftwardly as seen in the drawing to actuate the master cylinder.

By this time the reaction plunger 36 is in engagement with the forward end of the valve to which the push rod 30 is secured, and is able to transmit reaction back to the push rod 30 through that valve. The master cylinder actuation force is composed primarily of booster force exerted by the reaction housing 32 on the rear surface (forming a reaction wall) 102 of the reaction disc 38, and in minor part by the manual force exerted by the vehicle operator by way of the push rod 30, valve arrangement 28 and reaction plunger 36 to the centre portion of the reaction wall 102 of the reaction disc 38. These two forces are combined to provide the total actuation force of the master cylinder. This total actuation force is transmitted through the reaction disc 38 to the primary piston rear end 92, and moves the primary piston leftwardly relative to the housing 40 as viewed in the drawing.

Initial movement of the primary piston 60 closes off the inner periphery of the V-block seal 58 so that fluid in the primary pressurizing chamber 74 is then pressurized with further actuating movement of the primary piston. This pressurized fluid, as well as the mechanical force being transmitted from the primary piston 60 through the spring 84 to the secondary piston 52, will move the secondary piston 52 leftwardly as seen in the drawing to close off the compensation connection of the secondary pressurizing chamber 76 with the reservoir portion 90 and then pressurize brake fluid in the chamber 76. Upon release of the brake pedal by the vehicle operator, the primary piston 60 and the secondary piston 52 are moved rightwardly as seen in the drawing, as is the booster piston 24 with its power walls 20 and 22. Upon full brake release, the assembly 8 is returned to the position shown in the drawing.

As is illustrated in the drawing, virtually all of the master cylinder housing rear extension 62 is contained within the booster housing 14, and in particular the entire primary pressurizing piston 60 is contained within that booster housing when in the brake-release position. Thus the overall axial length of the entire assembly 8 is substantially decreased as compared with the booster and master cylinder assemblies commonly used in current production vehicles.

Since none of the seals 50, 54 and 58 move in the master cylinder bore 42, the bore need not have as fine a finish or diametrical tolerance as the master cylinders commonly used in current production vehicles. The master cylinder housing, and particularly the forward portion thereof, may therefore be made by less expensive methods, such as die casting, without additional finish on the surface of the cylinder bore 42.

Claims:

1. A brake booster and master cylinder assembly having a booster housing (14), a booster power wall (20,22) and piston (24) movable in the housing (14) in the brake-actuating direction under differential pressure thereacross and having a return spring (26) in the housing (14) continously urging the power wall (20,22) and piston (24) in the brake-release direction, booster control means (28) in the piston (24) having an input member (30) adapted to be operated manually by an operator, reaction mechanism (32,34,36,38,91) in the piston (24) arranged to transmit reaction forces to the piston (24) and operatively to the input member (30), and a master cylinder (12) having a master cylinder housing (40) with pressurizing chambers (74,76) therein, and a primary piston (60) and a secondary piston (52) reciprocably received and retained in the master cylinder housing (40) to pressurize brake fluid in the pressurizing chambers (74,76) during actuation, characterised in that the master cylinder housing (40) has an annular extension (62) positioned within the booster housing (14) and extending into the booster piston (24) so that the booster piston (24) telescopes over a part of the annular extension (62) during brake booster (10) and master cylinder (12) actuation, the primary piston (60) has one end (68,92) opposite the primary pressurizing chamber (74) reciprocably received in the annular extension (62) of the master cylinder housing (40) and extending into and forming a part (91) of the reaction mechanism (32,34,36,38,91) within the booster piston (24), the said one end (68,92) of the primary piston (60) has snap means (93) releasably attaching the primary piston (60) to the reaction

0193319

mechanism (32,34,36,38,91), and the booster return spring (26) acts by way of the booster piston (24) and the reaction mechanism (32,34,36,38,91) on the primary piston (60) to provide primary piston retractive force upon releasing action of the master cylinder (12) after actuation thereof.

2. A brake booster and master cylinder assembly according to claim 1, in which the reaction mechanism (32,34,36,38,91) comprises a reaction disc-type reaction mechanism including a reaction housing (32) mounted within the booster piston (24) in force-transmitting relation therewith, and a compressible reaction disc (38) disposed in the reaction housing (32) and having a pressure wall (91) for transmitting reaction force thereto and a reaction wall (102) having one section defined by a part of the reaction housing (32) for transmitting a portion of the reaction force received by the reaction disc (38) to the booster piston (24) and another section for operatively transmitting the remainder of the received reaction force to the booster input member (30), characterised in that the booster piston (24) has a recess axially formed therein and opening towards the master cylinder (12), the master cylinder housing (40) is mounted on the booster housing (14) and the annular extension (62) thereof extends into the booster piston recess so that the booster power wall (20,22) is positioned radially outwardly of the annular extension (62), for decreasing the overall length of the assembly, and the master cylinder primary piston (60) extends into the reaction housing (32) and is releasably attached thereto by the snap means (93), with one end of the primary piston (60) forming the reaction pressure wall (91) acting on the reaction disc mechanism to transmit the reaction force to the reaction disc (38) and therefore form a part of the reaction mechanism (32,34,36,38,91), and with all of the booster-generated master cylinder actuating force acting on the master cylinder (12) in the actuating direction being transmitted from the booster piston (24) through the reaction disc (38) to the primary piston (60) and all of the master cylinder actuating force acting on the master cylinder (12) in the actuating direction from the booster input member (30) being transmitted through the reaction disc (38) to the primary piston (60).

0193319